# EUROPEAN PATENT APPLICATION

(11) **EP 4 830 916 A1**
(43) Date of publication of application: **28.10.2026**
(21) Application number: 24907141.6
(22) Date of filing: 03.12.2024
(51) Int. Cl.: B32B 27/18, B32B 27/00, B65D 65/40

(54) **MULTILAYER SEALANT FILM**

(30) Priority: 22.12.2023 JP 2023217084
(71) Applicant: Kyodo Printing Co., Ltd., Tokyo 112-8501 (JP)
(72) Inventor: TOMIOKA, Kyoji, Tokyo 112-8501 (JP); SEKIMOTO, Junki, Tokyo 112-8501 (JP); KATO, Midori, Tokyo 112-8501 (JP); MIYOSHI, Daisuke, Tokyo 100-8324 (JP)
(74) Representative: Ricker, Mathias
(86) International application number: PCT/JP2024/042642
(87) International publication number: WO 2025/134754

(57) **Abstract**

As shown in Fig. 1, a multilayer sealant film 10 according to the present invention has an inorganic particle-containing layer 12 and a sealant layer 14, wherein the inorganic particle-containing layer 12 contains a thermoplastic resin and inorganic particles that are dispersed in the thermoplastic resin, the inorganic particles are an iron-based oxygen absorbent, the sealant layer 14 is formed from a polyethylene-based resin with a melting point of 120°C or less, and the TD-direction surface roughness Ra of a surface 14a on the sealant layer 14 side is 0.2 or greater.

## Description

### FIELD

The present invention relates to a multilayer sealant film, and particularly to a multilayer sealant film for a laminated tube container.

### BACKGROUND

Laminated tube containers have conventionally been produced by various methods. For example, after producing a laminated sheet and heat sealing the outermost layer and innermost layer at both ends to produce a tubular body, a head made of a mouth and shoulder is formed in one opening of the tubular body, with a cap being screwed over the mouth to produce a laminated tube container. The laminated tube container produced in this manner may be used to obtain a tube-like packaged product by filling semi-fluid contents such as toothpaste from the open end of the tubular body, and hermetically sealing the open end to form a bottom seal section. Various modes have been proposed for such laminated tube containers and the laminated bodies used in them.

PTL 1 discloses a tube-shaped container provided with an oxygen absorbing multilayer body composed of at least three layers: an inner layer comprising a thermoplastic resin, an oxygen absorbing layer composed of an oxygen absorbing resin composition comprising a copolymerized polyolefin compound and a transition metal catalyst, and a gas barrier layer comprising a gas barrier substance, layered in that order, wherein the copolymerized polyolefin compound is a copolymerized polyolefin compound comprising a structural unit represented by a specified general formula.

PTL 2 discloses an oxygen absorbing laminate for a laminated tube container, comprising at least a laminar structure in which a sealant layer A, a substrate layer, an oxygen barrier layer, an oxygen absorbing adhesive layer and a sealant layer B are laminated in that order. The oxygen absorbing adhesive layer is a layer formed from an oxygen absorbing adhesive composition, the oxygen absorbing adhesive composition being disclosed as an oxygen absorbing laminate for a laminated tube container comprising at least a specific oxygen absorbing compound and an oxidation promoting catalyst.

### [CITATION LIST]

### [PATENT LITERATURE]

[PTL 1] Japanese Unexamined Patent Publication No. 2014-144583
[PTL 2] Japanese Unexamined Patent Publication No. 2022-014238

### SUMMARY

### [TECHNICAL PROBLEM]

The object of the invention is to provide a novel multilayer sealant film that can ensure a satisfactory low-temperature sealing property and can improve processability during tube formation.

### [SOLUTION TO PROBLEM]

After much ardent research, the present inventors have found that the object of this invention can be achieved by the following technical means, and the invention has thereupon been completed. Specifically, the present invention provides the following.

### <Aspect 1>

A multilayer sealant film comprising an inorganic particle-containing layer and a sealant layer, wherein
the inorganic particle-containing layer comprises a thermoplastic resin and inorganic particles dispersed in the thermoplastic resin,
the sealant layer is composed of a polyethylene-based resin with a melting point of 120°C or lower, and
the surface roughness Ra in the TD of the surface on the sealant layer side is 0.2 or greater.

### <Aspect 2>

The multilayer sealant film according to aspect 1, wherein the inorganic particles are an iron-based oxygen absorbent.

### <Aspect 3>

The multilayer sealant film according to aspect 1 or 2, wherein the ratio of the D50 of the inorganic particles measured by laser diffraction with respect to the thickness of the multilayer sealant film is 0.3 to 0.5.

### <Aspect 4>

A laminated body for a laminated tube container, comprising the multilayer sealant film according to any one of aspects 1 to 3, and a substrate layer laminated on the inorganic particle-containing layer side of the multilayer sealant film.

### <Aspect 5>

The laminated body for a laminated tube container according to aspect 4, wherein the substrate layer has an inner substrate sealant layer situated on the outer surface on the inorganic particle-containing layer side, and
the thickness of the inner substrate sealant layer is greater than the thickness of the sealant layer of the multilayer sealant film.

### <Aspect 6>

A laminated tube container comprising the laminated body for a laminated tube container according to aspect 4, wherein
a portion of the substrate layer and a portion of the sealant layer are overlaid and heat sealed to form a side seam section, thereby forming the laminated body for a laminated tube container in the shape of a tube.

### [ADVANTAGEOUS EFFECTS OF INVENTION]

According to the invention it is possible to provide a novel multilayer sealant film that can ensure a satisfactory low-temperature sealing property and improve processability during tube formation.

### BRIEF DESCRIPTION OF DRAWINGS

Fig. 1 is a side cross-sectional view of a multilayer sealant film according to the invention.
Fig. 2 is a side cross-sectional view of a laminated body for a laminated tube container according to the invention.

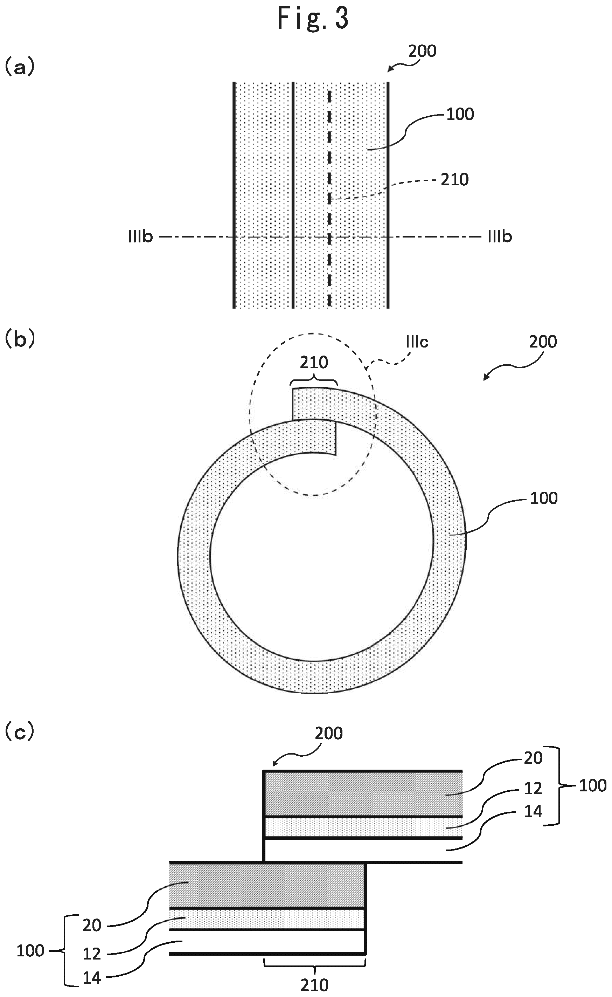

Fig. 3(a) is a simplified side view showing one mode of the laminated tube container of the invention. Fig. 3(b) is a simplified cross-sectional view showing one mode of the laminated tube container of the invention, on line IIIb-IIIb of Fig. 3(a). Fig. 3(c) is a magnified view of the section enclosed by line IIIc of Fig. 3(b).

### DESCRIPTION OF EMBODIMENTS

### <Multilayer sealant film>

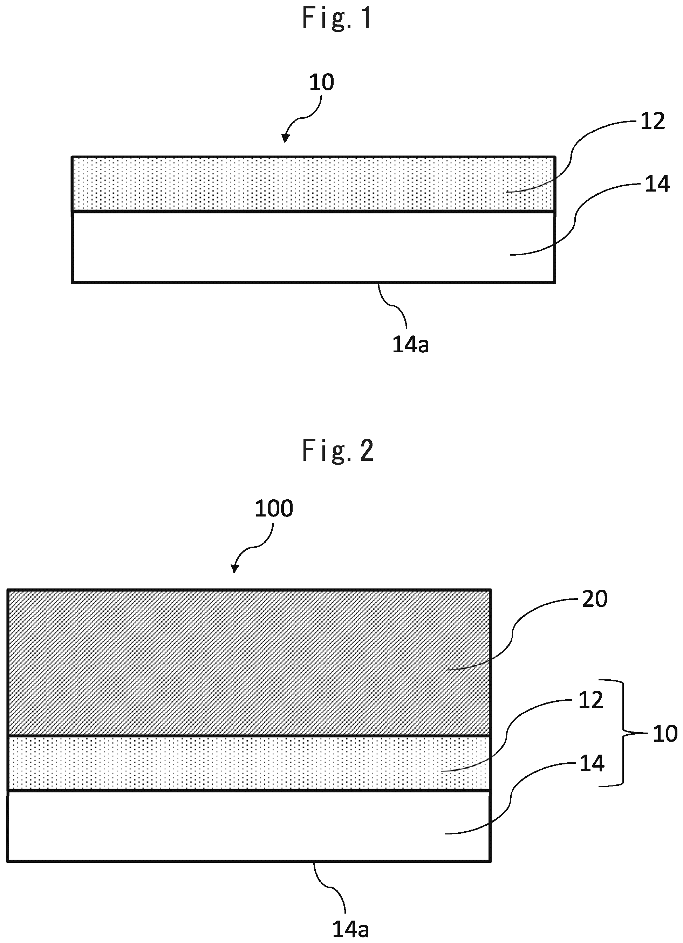

As shown in Fig. 1, the multilayer sealant film 10 of the invention comprises an inorganic particle-containing layer 12 and a sealant layer 14, wherein
the inorganic particle-containing layer 12 comprises a thermoplastic resin and inorganic particles dispersed in the thermoplastic resin,
the sealant layer 14 is composed of a polyethylene-based resin with a melting point of 120°C or lower, and
the surface roughness Ra in the TD of the surface 14a on the sealant layer 14 side is 0.2 or greater.

The present inventors have found that a melting point and surface roughness in the respective ranges specified above can improve the low-temperature sealing property and the processability during tube formation. When the surface roughness on the sealant layer side, in particular, is within this range, if the substrate layer is then laminated on the multilayer sealant film to form a sheet-like laminated body, then the resistance of the innermost layer of the laminated body will be reduced during molding into a tube shape, and as a result it will be possible to more smoothly feed out the film during processing.

This property is particularly useful when the multilayer sealant film of the invention is used in a laminated body for a laminated tube container. That is, the multilayer sealant film of the invention may be used for a laminated tube container.

The surface roughness Ra of the multilayer sealant film of the invention in the TD on the sealant layer side may be 0.2 to 1.0, such as 0.2 or greater, 0.3 or greater or 0.4 or greater, and 1.0 or lower, 0.8 or lower, 0.7 or lower or 0.6 or lower, for example.

By controlling the surface roughness Ra in the TD on the sealant layer side, it is possible to more smoothly feed out the film during tube formation. The surface roughness referred to here is the arithmetic mean roughness Ra measured according to JIS B0601-2013. Specifically, the surface roughness is the value determined by plotting the roughness curve as y = f(x), where a reference length l is sampled along the mean line from the roughness curve, the x-axis is taken along the mean line of the sampled portion and the y-axis is taken in the vertical magnification direction, with the result expressed in micrometers (µm). [Mathematical Formula 1] $Ra = \frac{1}{l} {\int }_{0}^{l} \left|f\left(x\right)\right| dx$

The surface roughness can be measured using a contact roughness meter (ET4000AK, Kosaka Laboratory, Ltd.), under the following conditions.
Cutoff: 0.8 mm
Filter: Gaussian
E. length: 4.000 mm
S. length: 0.800 mm
Levelling: Straight line (full area)
Polarity: Normal
Start-up: Cutoff × 1
Data: 8000 points

According to the invention, "TD" (transverse direction)" means the direction perpendicular to the "MD" (machine direction), which is the direction of flow in the machine.

The constituent elements of the invention will now be described.

### <Inorganic particle-containing layer>

The inorganic particle-containing layer comprises a thermoplastic resin and inorganic particles dispersed in the thermoplastic resin.

The thickness of the inorganic particle-containing layer may be 15 µm to 50 µm, for example. The thickness may be 15 µm or greater, 18 µm or greater, 20 µm or greater, 25 µm or greater or 28 µm or greater, and 50 µm or smaller, 48 µm or smaller, 45 µm or smaller, 42 µm or smaller, 40 µm or smaller, 38 µm or smaller, 35 µm or smaller or 32 µm or smaller.

The inorganic particle-containing layer can be obtained, for example, by melt mixing the components that are to compose the layer, and extruding the composition onto a polyethylene-based resin film that is to compose the sealant layer. The inorganic particle-containing layer and the sealant layer may also be directly laminated. That is, the inorganic particle-containing layer may be directly laminated on the sealant layer, or it may be fused onto it.

### (Thermoplastic resin)

A polyolefin-based resin, for example, may be used as the thermoplastic resin.

Examples of polyolefin-based resins that may be used include polyethylene-based resins and polypropylene-based resins.

For the purpose of the present specification, a polyethylene-based resin is a resin having a repeating unit of ethylene groups on a polymer main chain, at greater than 50 mol%, 60 mol% or greater, 70 mol% or greater or 80 mol% or greater, and for example, it may be selected from the group consisting of low-density polyethylene (LDPE), linear low-density polyethylene (LLDPE), medium-density polyethylene (MDPE), high-density polyethylene (HDPE), ethylene-acrylic acid copolymer (EAA), ethylene-methacrylic acid copolymer (EMAA), ethylene-ethyl acrylate copolymer (EEA), ethylene-methyl acrylate copolymer (EMA), and their derivatives, as well as mixtures of the foregoing.

A "polypropylene-based resin", for the purpose of the present specification, is a resin having a repeating unit of propylene groups in a polymer main chain, at greater than 50 mol%, 60 mol% or greater, 70 mol% or greater or 80 mol% or greater, examples of which include polypropylene (PP) homopolymer, random polypropylene (random PP), block polypropylene (block PP), chlorinated polypropylene, acid-modified polypropylene, and their derivatives, as well as mixtures of the foregoing.

The thermoplastic resin is preferably a polyethylene-based resin, and especially low-density polyethylene or linear low-density polyethylene, from the viewpoint of obtaining satisfactory bonding strength with the sealant layer.

### (Inorganic particles)

The inorganic particles are inorganic particles dispersed in a thermoplastic resin.

Examples of inorganic particles that may be used include gas absorbents and inorganic pigments.

A gas absorbent used may be an oxygen absorbent such as an iron powder-based oxygen absorbent, or an organic gas absorbent such as hydrophobic zeolite. Particularly when the multilayer sealant film of the invention is used in a laminated tube container, the use of an iron powder-based oxygen absorbent as the inorganic particles allows absorption of oxygen remaining in head space of the laminated tube container, and especially near the tail seal section described below, thereby reducing deterioration of the contents.

Examples of inorganic pigments that may be used include publicly known inorganic color pigments, flaky metal pigments such as aluminum powder, and brightness pigments such as pearl pigments.

The D50 of the inorganic particles as measured by laser diffraction may be 15 µm to 50 µm, such as 15 µm or greater, 18 µm or greater, 20 µm or greater, 22 µm or greater, 25 µm or greater or 28 µm or greater, and 50 µm or smaller, 45 µm or smaller, 42 µm or smaller, 40 µm or smaller, 38 µm or smaller, 35 µm or smaller or 32 µm or smaller, for example.

The ratio of the D50 of the inorganic particles measured by laser diffraction with respect to the thickness of the multilayer sealant film is preferably 0.30 to 0.50 from the viewpoint of obtaining such surface roughness. The ratio may be 0.30 or higher, 0.33 or higher, 0.35 or higher or 0.37 or higher, and 0.50 or lower, 0.45 or lower, 0.42 or lower or 0.40 or lower.

The content of the inorganic particles is not particularly restricted, but it is preferably 15 mass% to 50 mass% with respect to the mass of the inorganic particle-containing layer from the viewpoint of both surface roughness and moldability. The content may be 15 mass% or greater, 18 mass% or greater, 20 mass% or greater, 22 mass% or greater, 25 mass% or greater or 28 mass% or greater, and 50 mass% or lower, 45 mass% or lower, 42 mass% or lower, 40 mass% or lower, 38 mass% or lower, 35 mass% or lower or 32 mass% or lower, with respect to the mass of the inorganic particle-containing layer.

### <Sealant layer>

The sealant layer is composed of a polyethylene-based resin.

The melting point of the polyethylene-based resin composing the sealant layer is 120°C or lower, and especially 110°C to 120°C. The melting point is measured with a differential scanning calorimeter (DSC) according to JIS K7121:1987.

Of the polyethylene-based resins mentioned for the inorganic particle-containing layer, polyethylene-based resins satisfying the aforementioned melting point may be used, among which linear low-density polyethylene is preferred from the viewpoint of heat sealability.

The density of the polyethylene-based resin is also 0.900 g/cm³ or higher, 0.905 g/cm³ or higher, 0.910 g/cm³ or higher, 0.915 g/cm³ or higher or 0.918 g/cm³ or higher, and 0.950 g/cm³ or lower, 0.945 g/cm³ or lower, 0.940 g/cm³ or lower, 0.935 g/cm³ or lower or 0.930 g/cm³ or lower. The density is most preferably 0.930 g/cm³ or lower from the viewpoint of heat seal strength.

The thickness of the sealant layer is not particularly restricted, but from the viewpoint of obtaining the aforementioned surface roughness it is preferably a thickness that satisfies the ratio of the D50 of the inorganic particles with respect to the thickness of the multilayer sealant film. The thickness may be 40 µm to 60 µm, such as 40 µm or larger, 42 µm or larger, 45 µm or larger or 47 µm or larger, and 60 µm or smaller, 58 µm or smaller, 55 µm or smaller or 53 µm or smaller, for example.

### <Laminated body for laminated tube container>

As shown in Fig. 2, the laminated body for a laminated tube container according to the invention has the aforementioned multilayer sealant film 10 and a substrate layer 20 laminated on the inorganic particle-containing layer 12 side of the multilayer sealant film 10.

The inorganic particle-containing layer of the multilayer sealant film and the substrate layer may be bonded via an adhesive layer.

### <Substrate layer>

The substrate layer is generally a non-permeable substrate. Specifically, the substrate layer of the laminated body for a laminated tube container of the invention has a substrate sealant layer on the surface. The substrate layer may be a single layer or a stack of multiple laminated layers, or it may comprise multiple different types of layers.

The substrate layer may also comprise, for example, an outer substrate sealant layer, a print layer, a barrier layer, a reinforcement layer and an inner substrate sealant layer. These layers may be laminated by optional laminating means, or they may be laminated via an adhesive layer, for example. An optional printing layer may also be laminated on the print layer. Particularly when the inorganic particles are an iron powder-based oxygen absorbent, the oxygen permeability of the substrate layer may be lower than the oxygen permeability of the sealant layer. The oxygen permeability referred to here may be measured according to JIS K7126-1, at a temperature of 25°C and a relative humidity of 0%.

The substrate layer used may be, for example, a substrate having the following laminar structure:
· LDPE (75 µm)/milky white LDPE (160 µm)/LDPE (50 µm)/PET (12 µm)/LLDPE (100 µm)
· LLDPE (55 µm)/transparent LDPE (80 µm)/EAA (20 µm)/AL (12 µm)/EMAA (25 µm)/PET (12 µm)/LLDPE (100 µm)

### (Outer substrate sealant layer)

The outer substrate sealant layer is a sealant layer situated on the outer surface of the substrate layer on the side opposite the inorganic particle-containing layer. When the laminated body for a laminated tube container of the invention is used to obtain a laminated tube container, it may be a layer that is heat sealed with the sealant layer of the multilayer sealant film.

The outer substrate sealant layer used may be a polyethylene-based resin, such as mentioned as a sealant layer for the multilayer sealant film.

### (Print layer)

The print layer is not particularly restricted so long as it is a layer with a degree of non-permeability allowing printing of a printing layer, and it may be a resin layer, for example.

Examples for the print layer include thermoplastic resins such as polyolefin-based resins, vinyl-based polymers, polyester-based resins and polyamide-based resins, either alone or in combinations of two or more. The thermoplastic resin may be used in the form of a film or an extruded resin. The film may be either a stretched film or an unstretched film.

Examples of polyolefin-based resins that may be used include polyethylene-based resins and polypropylene-based resins. For these resins, refer to the description regarding the inorganic particle-containing layer.

Polyvinyl chloride (PVC) is an example of a vinyl-based polymer.

Examples of polyester-based resins include polyethylene terephthalate (PET) and polybutylene terephthalate.

Examples of polyamide-based resins include nylon, such as nylon (registered trademark) 6 and nylon MXD6.

### (Barrier layer)

The barrier layer used may be an inorganic vapor deposition layer, metal foil layer or organic material coat layer, for example.

The inorganic vapor deposition layer used may be, for example, a silica vapor deposition film, aluminum vapor deposition film, alumina vapor deposition film or silica-alumina vapor deposition film.

The metal foil layer used may be a simple metal foil such as an aluminum foil, copper foil or titanium foil, or an alloy foil such as an aluminum alloy foil or stainless steel foil.

The organic material coating layer used may be, for example, a vinylidene chloride coating layer or polyvinylidene fluoride coating layer.

When an inorganic vapor deposition film or organic coating layer is used as the barrier layer, the thickness of the barrier layer is preferably 100 nm or larger, 200 nm or larger, 300 nm or larger, 500 nm or larger, 700 nm or larger or 1 µm or larger from the viewpoint of ensuring strength and barrier properties, and preferably 5 µm or smaller, 4 µm or smaller, 3 µm or smaller or 2 µm or smaller from the viewpoint of improving handleability as a laminated body for a tube.

When a metal foil layer is used as the barrier layer, the thickness of the barrier layer is preferably 3 µm or larger, 5 µm or larger, 7 µm or larger, 10 µm or larger or 15 µm or larger from the viewpoint of ensuring strength and barrier properties, and 100 µm or smaller, 80 µm or smaller, 60 µm or smaller, 55 µm or smaller, 50 µm or smaller, 45 µm or smaller, 40 µm or smaller or 35 µm or smaller from the viewpoint of improving handleability as a laminated body for a tube.

### (Reinforcement layer)

The reinforcement layer may be a layer composed of a stretched film.

The reinforcement layer may be a stretched film composed of a polyester-based resin, polyamide-based resin or polypropylene-based resin, for example. For these resins, refer to the description regarding the print layer.

When the reinforcement layer is composed of a stretched film, the stretched film composing the reinforcement layer may be a stretched film obtained by flat stretching, for example, and it may be either a uniaxially stretched film or biaxially stretched film. A biaxially stretched film may be a sequential biaxially stretched film or a simultaneous biaxially stretched film, or it may be a stretched film obtained by several stretching operations.

The thickness of the reinforcement layer is preferably 5 µm or larger, 7 µm or larger, 10 µm or larger, 12 µm or larger or 25 µm or larger from the viewpoint of imparting practical recoverability to the laminated tube container. The thickness of the reinforcement layer is also preferably 50 µm or smaller, 40 µm or smaller, 30 µm or smaller, 20 µm or smaller, 15 µm or smaller or 12 µm or smaller from the viewpoint of avoiding impairment of short-term shape retention and avoiding excessive increase in the total thickness of the laminated body for a laminated tube container.

### (Inner substrate sealant layer)

The inner substrate sealant layer is the layer situated on the inorganic particle-containing layer side of the multilayer sealant film, i.e. on the outer surface of the substrate layer on the side opposite the substrate sealant layer side. The resin used to form the inner substrate sealant layer may be any of the polyethylene-based resins mentioned for the outer substrate sealant layer.

The thickness of the inner substrate sealant layer may be 50 µm or larger, 60 µm or larger, 70 µm or larger, 80 µm or larger, 90 µm or larger or 95 µm or larger, and 150 µm or smaller, 140 µm or smaller, 130 µm or smaller, 120 µm or smaller, 110 µm or smaller or 105 µm or smaller.

Particularly when the inorganic particles are an iron powder-based oxygen absorbent, the thickness of the inner substrate sealant layer is preferably greater than the thickness of the sealant layer of the multilayer sealant film from the viewpoint of facilitating absorption of oxygen.

### <Adhesive layer>

The adhesive layer is a layer situated between the substrate layer and the inorganic particle-containing layer of the multilayer sealant film, and optionally between each of the layers composing the substrate layer, thus bonding them together.

The adhesive layer used may be, for example, a dry laminate adhesive, a hot-melt adhesive, a water-soluble adhesive, an emulsion adhesive, a non-solvent laminate adhesive, or a thermoplastic resin for an extruded laminate. Preferred among these are a dry laminate adhesive, and especially a two-pack curable dry laminate adhesive.

### <Laminated tube container>

As shown in Fig. 2, the laminated tube container 200 of the invention comprises the aforementioned laminated body for a laminated tube container 100. A portion of the sealant layer 14 of the multilayer sealant film and a portion of the substrate sealant layer (not shown) of the substrate layer 20 are overlaid and heat sealed to form a side seam section 210, thereby forming the laminated body for a laminated tube container 100, in the shape of a tube.

While not shown here, the laminated tube container of the invention may also have a head with a shoulder and cap, and a tail seal section situated on the side opposite the head.

The laminated tube container may be filled with contents such as a chemical, cosmetic or food. Examples of contents include toothpaste, moisturizing cream and sunscreen.

The laminated tube container can be produced by a method comprising the following steps, for example:
a step of rolling the laminated body for the laminated tube with the substrate, particularly with the sealant layer of the substrate as the inner side, while stacking and heat sealing together the edges of the laminated body, thereby forming a side seam section to obtain a tube part; and
a step of bonding a head having a shoulder and a cap to the perimeter edge of the opening of the body part, to obtain a laminated tube container.

### EXAMPLES

The present invention will now be explained in more specific detail through the following Examples and Comparative Examples, which are not intended to limit the invention in any way.

### <Fabrication of multilayer sealant film>

### <Example 1>

A resin composition for an oxygen absorbing layer (thickness: 30 µm), as an inorganic particle-containing layer, was extruded and laminated onto a linear low-density polyethylene (LLDPE) film (density: 0.920 g/cm³, melting point: 113°C, thickness: 50 µm, LLDPE1) as the sealant layer, to fabricate a multilayer sealant film for Example 1.

The resin composition for the oxygen absorbing layer was a resin composition obtained by dispersing an iron-based oxygen absorbent (D50:30 µm) in a polyethylene-based resin to a content of 25 to 30 mass% with respect to the mass of the oxygen absorbing layer.

### <Example 2 and Comparative Example 1>

Multilayer sealant films for Example 2 and Comparative Example 1 were fabricated in the same manner as Example 1, except that the sealant layers used were those listed in Table 1. The materials listed in Table 1 are the following.
LLDPE2: Linear low-density polyethylene film (melting point: 116°C)
LLDPE3: Linear low-density polyethylene film (melting point: 122°C)

### <Measurement of surface roughness>

The surface roughness of the fabricated multilayer sealant film was measured under the following conditions using a contact roughness meter (ET4000AK, Kosaka Laboratory, Ltd.).
Cutoff: 0.8 mm
Filter: Gaussian
E. length: 4.000 mm
S. length: 0.800 mm
Levelling: Straight line (full area)
Polarity: Normal
Start-up: Cutoff × 1
Data: 8000 points

The measurement was conducted in both the MD and TD, from both the inorganic particle-containing layer side and sealant layer side. The same measurement was conducted 6 times, and the average value was calculated and recorded as the surface roughness in the MD and TD, respectively.

### <Fabrication of laminated body for laminated tube container>

A laminated body with the following laminar structure was prepared as the substrate layer:
LLDPE (55 µm)/transparent LDPE (80 µm)/EAA (20 µm)/ AL (12 µm)/EMAA (25 µm)/PET (12 µm)/LLDPE4 (100 µm)

The surface on the "LLDPE4 (100 µm)" side of the substrate layer and the inorganic particle-containing layer of the multilayer sealant film of Example 1 were layered with a dry lamination adhesive to fabricate a laminated body for a laminated tube container.

Laminated bodies for a laminated tube container were fabricated in the same manner, using the multilayer sealant films of Example 2 and Comparative Example 1 instead of the multilayer sealant film of Example 1. A laminated body employing the substrate layer alone was also fabricated, and will be referred to hereunder as the laminate tube laminated body for Comparative Example 2. In Comparative Example 2, the "LLDPE4" of the substrate layer was used as the sealant layer on the multilayer sealant film side.

The surface roughness on the sealant layer side of the obtained laminated body for a laminated tube container was measured under the same conditions as described above.

### <Evaluation>

### <Low-temperature sealing property>

After preparing two of the same fabricated laminated bodies for a laminated tube container, the innermost layer of the one laminated body was overlaid onto the outermost layer of the other laminated body and heat sealed under conditions with a temperature of 160°C, a pressure of 0.3 MPa and a seal time of 1.0 second, and the overlaid stack was cut out to a 15 mm width so that the heat sealed section and the non-heat sealed section each occupied half in the lengthwise direction. The cut laminated body was peeled off in a T-shape under conditions with a width of 15 mm, a chuck distance of 50 mm and a pull rate of 300 mm/min, and the heat seal strength was measured. The same measurement was conducted five times and the average value was calculated as the heat seal strength.

### <Processability during tube formation>

The obtained laminated body for a laminate tube was used to form a tube, and the processability during tube formation was evaluated as follows.
A: Working proceeded without problems.
B: Working did not proceed smoothly, requiring modification of the working conditions.

The construction and evaluation results for the Examples and Comparative Examples are shown in Table 1.

**[Table 1]**

| | | | | | Example 1 | Example 2 | Comp. Ex. 1 | Comp. Ex. 2 |
|---|---|---|---|---|---|---|---|---|
| Construction | Substrate layer | Sealant layer | | Materials | - | - | - | LLDPE4 |
| | | | | Melting point (°C) | - | - | - | 115 |
| | Multilayer sealant film | Sealant layer | | Materials | LLDPE1 | LLDPE2 | LLDPE3 | - |
| | | | | Melting point (°C) | 113 | 116 | 122 | - |
| | | Inorganic particle-containing layer | | Materials | Iron powder | Iron powder | Iron powder | - |
| | | | | D50 (µm) | 30 | 30 | 30 | - |
| | | Surface roughness | MD | Inorganic particle side | 0.38 | 0.49 | 0.40 | - |
| | | | | Sealant side | 0.30 | 0.26 | 0.30 | - |
| | | | TD | Inorganic particle side | 0.45 | 0.50 | 0.50 | - |
| | | | | Sealant side | 0.47 | 0.42 | 0.45 | - |
| | Laminated body | Surface roughness | MD | | 0.25 | 0.34 | 0.30 | 0.07 |
| | | | TD | | 0.53 | 0.51 | 0.50 | 0.08 |
| Evaluation results | Low-temperature heat seal strength (N/15 mm) | | | | 90 A | 67 | 7 | - |
| | Processability during tube formation | | | | | A | 7 A | - B |

It will be readily understood that a laminated body for a laminated tube container employing a multilayer sealant film according to the Examples, wherein the sealant layer is composed of a polyethylene-based resin with a melting point of 120°C or lower and the surface roughness Ra of the surface on the sealant layer side in the TD is 0.2 or greater, has a satisfactory low-temperature sealing property and satisfactory processability during tube formation.

In addition, a laminated tube container obtained using the laminated body for a laminated tube container employing the multilayer sealant film of Examples 1 or 2 each had satisfactory thickness and physical strength for practical use.

### REFERENCE SIGNS LIST

10 Multilayer sealant film
12 Inorganic particle-containing layer
14 Sealant layer
14a Surface of sealant layer side of multilayer sealant film
20 Substrate layer
100 Laminated body for laminated tube container
200 Laminated tube container
210 Side seam section

## Claims

1. A multilayer sealant film comprising an inorganic particle-containing layer and a sealant layer, wherein
the inorganic particle-containing layer comprises a thermoplastic resin and inorganic particles dispersed in the thermoplastic resin,
the inorganic particles are an iron-based oxygen absorbent,
the sealant layer is composed of a polyethylene-based resin with a melting point of 120°C or lower, and
the surface roughness Ra in the TD of the surface on the sealant layer side is 0.2 or greater.

2. The multilayer sealant film according to Claim 1, wherein the ratio of the D50 of the inorganic particles measured by laser diffraction with respect to the thickness of the multilayer sealant film is 0.3 to 0.5.

3. A laminated body for a laminated tube container, comprising the multilayer sealant film according to Claims 1 or 2, and a substrate layer laminated on the inorganic particle-containing layer side of the multilayer sealant film.

4. The laminated body for a laminated tube container according to Claim 3, wherein the substrate layer has an inner substrate sealant layer situated on the outer surface on the inorganic particle-containing layer side, and
the thickness of the inner substrate sealant layer is greater than the thickness of the sealant layer of the multilayer sealant film.

5. A laminated tube container comprising the laminated body for a laminated tube container according to Claim 3, wherein
a portion of the substrate layer and a portion of the sealant layer are overlaid and heat sealed to form a side seam section, thereby forming the laminated body for a laminated tube container in the shape of a tube.
